# EUROPEAN PATENT APPLICATION

(11) **EP 4 825 551 A1**
(43) Date of publication of application: **21.10.2026**
(21) Application number: 25305537.0
(22) Date of filing: 14.04.2025
(51) Int. Cl.: B27K 3/50, A01N 25/02, C10G 3/00, C10G 45/58, C10G 65/04, C10L 1/04

(54) **HYDROCARBON FLUID AS WOOD PRESERVATIVE**

(71) Applicant: TotalEnergies OneTech, 92400 Courbevoie (FR)
(72) Inventor: SWOBODA, Benjamin, 69360 Solaize (FR); PERUMALSAMY, Jayachandran, 400710 Navi Mumbai (IN); KHANRA, Sipra, 400710 Navi Mumbai (IN)
(74) Representative: Lavoix

(57) **Abstract**

The present invention concerns the use of a hydrocarbon fluid as a wood preservative, wherein said fluid comprises less than 1000 ppm by mass of aromatics, has a flash point measured according to standard ASTM D93 higher than 100°C, has a mass ratio normal paraffins/isoparaffins ranging from 0.2 to 1.0 and has an initial boiling point and a final boiling point in range from 265°C to 390°C.

## Description

The present invention concerns the use of a hydrocarbon fluid having a high flash point as wood preservative against xylophagous species. The present invention also concerns a process using said fluid for wood preservation against xylophagous species.

Wood is a complex biomass material, the properties of which are typically defined by their proportions of cellulose, hemicellulose lignin, and extractive compounds. Wood possesses great advantages, such as high strength-to-mass ratio, high impact resistance processability, and regulation of air temperature and humidity. However, due to the hygroexpansion of wood composites, wood is highly susceptible to climate conditions and is dimensionally unstable. Owing to the absorption of moisture, wood is prone to undergo attacks from xylophagous species.

The restriction of hygroscopicity in wood can be achieved through many modification methods, including steam use under natural environment treatment, methyltrimethoxysilane modification, styrene modification, siloxanes modification, high density polyethylene modification, flame retardant and thermal treatments. However, thermal treatments may attenuate the wood mechanical properties and chemical modifications might be environmentally detrimental. In addition, the available modification methods are often complex and energy consuming.

In this context, oil preservation is effective to improve wood dimensional stability and durability. The oil enters the pores on the wood surface and blocks the xylophagous species.

The aim of the present invention is thus to provide a new wood preservative, especially against xylophagous species.

The aim of the present invention is also to provide a method to protect woods in particular against xylophagous species.

Therefore, the present invention concerns the use of a hydrocarbon fluid as a wood preservative, wherein said fluid comprises less than 1000 ppm by mass of aromatics, has a flash point measured according to standard ASTM D93 higher than 100°C, has a mass ratio normal paraffins/isoparaffins ranging from 0.2 to 1.0 and has an initial boiling point and a final boiling point in the range from 265°C to 390°C.

Particularly, the inventors have unexpectedly discovered that the use of a fluid as described above not only reduces the moisture content but also effectively prevents attacks from xylophagous species, thus offering a much more effective alternative than those already described in the prior art. The use of the hydrocarbon fluid according to the invention not only improves the wood's durability but also acts as a protective barrier, preventing the proliferation of xylophagous species and prolonging the lifespan of the material.

The present invention also relates to the use of the hydrocarbon fluid as described above as a wood preservative against xylophagous species.

Advantageously, the hydrocarbon fluid has a water content, measured according to standard ASTM D6304, lower than 150 ppm, preferably lower than 130 ppm, preferably lower than 120 ppm.

According to one embodiment, the hydrocarbon fluid has a flash point, measured according to standard ASTM D93, higher than 130°C, preferably higher than 150°C.

Preferably, the hydrocarbon fluid comprises less than 500 ppm by mass of aromatics, preferably, less than 300 ppm by mass of aromatics, preferably, less than 200 ppm by mass of aromatics, based on the total mass of hydrocarbon fluid.

Advantageously, the hydrocarbon fluid has a kinematic viscosity at 40°C, measured according to standard ASTM D445, ranging from 1 to 20 mm²/s, preferably from 2 to 15 mm²/s, more preferably from 3 to 10 mm²/s.

Preferably, the hydrocarbon fluid comprises a naphthene content ranging from 5% to 40% by mass, preferably from 7% to 30%, more preferably from 8% to 25%, based on the total mass of the hydrocarbon fluid.

Advantageously, the hydrocarbon fluid has a mass ratio normal paraffins/isoparaffins ranging from 0.3 to 0.9, preferably from 0.35 to 0.8.

According to an embodiment, the xylophagous species are selected from the group consisting of termites, beetles, and fungi.

The present invention also relates to a method for treating wood, said method comprising a step of contacting the wood with a hydrocarbon fluid as defined above.

Preferably, the step of contacting is a step of immersing the wood into the hydrocarbon fluid.

Advantageously, in the method for protecting wood according to the invention, the hydrocarbon fluid is heated to a temperature ranging from 140°C to 200°C, preferably from 140°C to 160°C.

Preferably, the method for protecting wood against xylophagous species according to the invention comprises a step of contacting the wood with a hydrocarbon fluid as defined above.

As mentioned above, the present invention relates to the use of a hydrocarbon fluid as a wood preservative, wherein said fluid comprises less than 1000 ppm by mass of aromatics, has a flash point measured according to standard ASTM D93 higher than 100°C, has a mass ratio normal paraffins/isoparaffins ranging from 0.2 to 1.0 and has an initial boiling point and a final boiling point in the range from 265°C to 390°C.

By "wood preservative", it is meant a chemical substance or treatment applied to wood to protect it from deterioration caused by various factors such as moisture, fungi, insects, and other environmental conditions. These preservatives help extend the lifespan of the wood by preventing decay, rot, and insect infestation, making the wood more durable and suitable for use in various outdoor or high-humidity applications.

The terms "preservation", "treatment" and "conditioning" are used interchangeably to describe the action of protecting the wood.

The hydrocarbon fluid as mentioned above may thus be used as a wood preservative, a wood conditioner or an agent for treating wood.

According to a preferred embodiment, the hydrocarbon fluid as defined above is used as a wood preservative against xylophagous species.

By "xylophagous species" it is meant organisms, typically insects or fungi, that feed on wood. These species are capable of breaking down the cellulose and lignin in wood, leading to its decay and structural weakening. Common examples of xylophagous species include termites, wood-boring beetles, woodlice or carpenter ants, and certain types of fungi such as for example *Serpula lacrymans* or mold type fungi such as *Cladosporium,* or *Aspergillus.*

Advantageously, the xylophagous species are selected from the group consisting of: termites, beetles, and fungi.

The common factor between xylophagous species is the high moisture content of wood, which enables these organisms to thrive. Xylophagous species, such as termites, wood-boring insects, and certain fungi, require moisture to survive and reproduce, making moist wood particularly vulnerable to their attacks. Similarly, mold grows in high-humidity conditions and easily settles on water-saturated wood. In both cases, wood with high water content becomes more susceptible to damage and degradation.

Also, the use of the fluid according to the invention for treatment further helps to reduce the moisture content of the wood after treatment, thereby preventing the proliferation of the xylophagous species.

Preferably, the hydrocarbon fluid according to invention is used for controlling moisture in wood to prevent both xylophagous infestations and mold formation.

The hydrocarbon fluid according to the invention can be used to protect a wide range of wood types, including but not limited to oak, teak, mahogany, cedar, pine, redwood, Douglas fir, ipe, ash, maple, birch, spruce, cherry, walnut, and poplar. These wood species, commonly used in construction or any outdoor uses, can be effectively treated to reduce moisture content, making them less susceptible to undergo attacks from xylophagous species.

According to an embodiment, the hydrocarbon fluid described above has a water content lower than 150 ppm, preferably lower than 130 ppm, preferably lower than 120 ppm.

According to an embodiment, the hydrocarbon fluid described above has a water content ranging from 60 ppm to 160 ppm, preferably from 80 ppm to 150 ppm, more preferably from 100 ppm to 120 ppm.

The water content can be measured according to well-known methods for the skilled person. As an example, the water content can be measured according to ASTM D6304 standard.

According to the invention, the hydrocarbon fluid has an initial boiling point and a final boiling point in the range from 265°C to 390°C, preferably from 275°C to 390°C, more preferably from 290°C to 390°C, even more preferably from 300 to 390°C.

The boiling point can be measured according to well-known methods for the skilled person. As an example, the boiling point can be measured according to ASTM D86 standard.

As well understood by the skilled person, a boiling range below 80°C means that the difference between the final boiling point and the initial boiling point is less than 80°C.

According to an embodiment, the fluid has a boiling range below 80°C, preferably below 70°C, more preferably in the range from 50°C to 70°C, advantageously from 60°C to 70°C.

According to an embodiment, the hydrocarbon fluid has a flash point higher than 130°C, preferably higher than 150°C.

According to an embodiment, the hydrocarbon fluid described above has a flash point ranging from 100°C to 400°C, preferably from 130°C to 220°C, more preferably from 150°C to 200°C.

The flash point can be measured according to well-known methods for the skilled person. As an example, the flash point can be measured according to ASTM D93 standard.

According to one embodiment, the hydrocarbon fluid comprises less than 500 ppm by mass of aromatics, preferably less than 300 ppm by mass, more preferably less than 200 ppm by mass, based on the total mass of said hydrocarbon fluid.

According to an embodiment, the hydrocarbon fluid ranging from 100 ppm to 500 ppm by mass of aromatics, preferably from 150 ppm to 300 ppm by mass of aromatics, more preferably from 170 ppm to 200 ppm by mass of aromatics, based on the total mass of the hydrocarbon fluid.

The aromatic content can be measured according to well-known methods for the skilled person, for example by UV spectrometry.

Within the meaning of the present invention, by "aromatics", it is to be understood compounds having at least one aromatic ring. If the aromatic compound is a monoaromatic, said compound comprises only one ring and if the aromatic compound is a polyaromatic, said compound comprises at least two aromatic rings.

According to an embodiment, the hydrocarbon fluid has a kinematic viscosity at 40°C ranging from 1 to 20 mm²/s, preferably from 2 to 15 mm²/s, more preferably from 3 to 10 mm²/s.

The kinematic viscosity can be measured according to standard ASTM D 445.

According to an embodiment, the hydrocarbon fluid comprises a naphthene content ranging from 5% to 40%, preferably from 7% to 30%, more preferably from 8% to 25%, based on the total mass of the hydrocarbon fluid.

The content of naphthenic compounds can be measured by gas chromatography.

Within the meaning of the present invention, by "naphthenes", it is to be understood saturated cyclic compounds, having one or more rings, the ring(s) being optionally substituted by alkyl group(s). If the naphthenic compound is a mononaphthenic, said compound comprises only one saturated ring and if the naphthenic compound is a polynaphthenic, said compound comprises at least two saturated rings.

According to an embodiment, the hydrocarbon fluid has a mass ratio normal paraffins/isoparaffins ranging from 0.2 to 1.0, preferably from 0.3 to 0.9, more preferably from 0.35 to 0.80.

The amount of normal paraffin and isoparaffins can be measured according to well-known methods for the skilled person, for example by gas chromatography.

The hydrocarbon fluid has a normal paraffin content ranging from 5% to 50%, preferably from 10% to 45%, more preferably from 15% to 40%, based on the total mass of said hydrocarbon fluid.

The hydrocarbon fluid has an isoparaffin content ranging from 30 to 80%, preferably from 35% to 75%, more preferably from 40% to 70%, based on the total mass of said hydrocarbon fluid.

Within the meaning of the present invention, by "normal paraffins", it is to be understood saturated linear compounds.

Within the meaning of the present invention, by "isoparaffins", it is to be understood saturated branched compounds.

The hydrocarbon fluid can be obtained in the following way. The hydrocarbon fluid according to the invention is a hydrocarbon fluid which can be derived in a known manner from fossil sources such as crude petroleum or from renewable sources, such as biomass or products issued from recycling process.

Preferably, for the purposes of the invention, the term "hydrocarbon fluid" is intended to mean a fraction resulting from the distillation of crude petroleum, preferably resulting from the atmospheric distillation and/or the vacuum distillation of crude petroleum, preferably resulting from atmospheric distillation followed by vacuum distillation.

The hydrocarbon fluid used within the invention is advantageously obtained by means of a process comprising hydrotreatment, hydrocracking and/or catalytic cracking steps.

The hydrocarbon fluid used in the invention is preferably obtained by means of a process comprising dearomatization and optionally desulfurization steps.

According to an embodiment, the hydrocarbon fluid according to the invention is not subjected to a dewaxing step. Dewaxing is a known process for treating hydrocarbon fractions without conversion, consisting in removing the paraffins and the microcrystalline waxes from a feedstock or in converting them into compounds of lower molecule weight and/or of different molecular structure. The dewaxing processes conventionally known are solvent-extraction or hydrodewaxing processes. During these processes, the normal paraffins are extracted or converted into isoparaffins in order generally to obtain a lower pour point. The term "dewaxing" is intended to mean a treatment process which makes it possible to obtain a hydrocarbon fluid comprising a weight content of normal paraffins of less than 10%. Processes resulting in partial dewaxing of the hydrocarbon fraction are not excluded from the invention.

According to an embodiment, the hydrocarbon fluid obtained after the distillation step(s) is chosen from gas oil fractions or mineral oil fractions. The gas oil fraction is preferably obtained by means of a process comprising hydrotreatment, hydrocracking and/or catalytic cracking steps, optionally followed by dearomatization and optionally desulfurization steps. The mineral fraction is preferably obtained by means of a process comprising vacuum-distillation, solvent-extraction and optionally partial dewaxing and hydrotreatment or hydrocracking steps.

The hydrocarbon fluid may be a mixture of hydrocarbon fluids which have undergone the steps described above.

All percentages and ppm are by weight unless indicated to the contrary. Singular and plural are used interchangeably to designate the fluid(s).

The details of the hydrocarbon fluid according to the invention are described in the international application WO 2021/250115.

The present invention also relates to a method for wood treatment, said method comprising a step of contacting the wood with a hydrocarbon fluid as defined above.

According to an embodiment, the step of contacting the wood in the method according to the invention is a step of spraying the wood with the hydrocarbon fluid as described above.

According to an embodiment, the step of contacting the wood in the method according to the invention is a step of coating the wood with the hydrocarbon fluid as described above.

Preferably, the step of contacting the wood in the method according to the invention is a step of coating such as dipping, deluging, spraying or brushing, all being techniques well known from the skilled person.

According to an embodiment, the step of contacting the wood in the method according to the invention is a step of immersing the wood in the hydrocarbon fluid as described above.

According to an embodiment, the method of the invention consists in a step of impregnation, such as high pressure impregnation or double vacuum impregnation into the body of the wood, all being techniques well known from the skilled person.

The hydrocarbon fluid as defined above may be applied on at least one surface of the wood. Preferably, "wood" refers to a piece of wood or a wood panel.

According to an embodiment, the method of the invention is carried out on sawn timber, logs, glulam, plywood, laminated veneer lumber (LVL), wood based composite products such as oriented strand board (OSS), medium density fibreboard (MDF), fibreboard, hardboard or particle board.

According to an embodiment, "wood" does not encompass living trees or other plants.

According to an embodiment, the method of the invention is carried out on a piece of wood such as a piece or an object made of wood.

According to an embodiment, the method of the invention consists in treating a piece of wood such as a wood panel.

According to an embodiment, the method of the invention consists in spraying the hydrocarbon fluid as defined above on a piece of wood, in particular on at least one surface of said piece.

The hydrocarbon fluid in the method according to the invention is applied at a controlled temperature.

According to an embodiment, the hydrocarbon fluid according to the invention is applied at room temperature, typically from 15°C to 30°C, preferably from 17°C to 27°C.

Preferably, in this embodiment, the wood is contacted with the fluid for a period ranging from 5s to 30s, preferably for 20s, more preferably for two periods of 10s.

According to an embodiment, the hydrocarbon fluid according to the invention is heated to a temperature above its boiling range, preferably the hydrocarbon fluid according to the invention is heated to a range of temperatures ranging from 140°C to 200°C, more preferably from 140°C to 160°C, in particular for 15 minutes conditioning, to ensure optimal absorption and effectiveness.

Preferably, in this embodiment, the wood is contacted with the fluid for a period ranging from 5 minutes to 25 minutes, preferably for 15 minutes. This helps to avoid prolonged exposure to boiling temperatures, which can sometimes lead to warping or damage to more delicate wood species.

Preferably, the method according to the invention further includes a drying step, which is carried out after the step of contacting the wood with a hydrocarbon fluid.

Another object of the present invention is a method for protecting the wood, especially against xylophagous species, said method comprising a step of contacting the wood with a hydrocarbon fluid as defined above.

### FIGURES

Figure 1 is a picture of the wood samples treated using a fluid according to the invention (C1) with the boiling method. The wood samples treated with the composition according to the invention did not show any color change after 4 weeks.
Figure 2 is a picture of the wood samples treated using the linseed oil (CC1) with the boiling method. The wood samples treated with the linseed oil turned dark brown after 4 weeks.

### EXAMPLES

The invention is now described trough out the following examples, which are not intended to limit the scope of the present invention, but are incorporated to illustrate advantages of the present invention and the best modes to perform it.

### EXAMPLE 1 - Physical and chemical properties of the wood preservative fluids

Composition C1, described in Table 1 below, is a hydrocarbon fluid according to the invention, whereas the comparative composition CC1, also described in Table 1, is a plantbased fluid (linseed oil) with a water content higher than according to the invention. Both fluids were used in the present examples.

**Table 1 - Wood preservatives**

| **Properties** | **Method** | **Unit** | **C1** | **CC1** |
|---|---|---|---|---|
| Density at 15°C | ASTM D4052 | kg/m³ | 833,2 | 979,3 |
| Refractive Index at 20°C | ASTM D1218 | - | 1,45839 | 1,48807 |
| Aniline Point | ASTM D611 | °C | 96 | 31,8 |
| Pour point | ASTM D97 | °C | 6 | -3 |
| Flash Point (PMCC) | ASTM D93 | °C | 160 | 216 |
| Kinematic Viscosity at 40°C | ASTM D445 | mm²/s | 6,8012 | 1019 |
| Kinematic Viscosity at 100°C | ASTM D445 | mm²/s | 2,0833 | 98,12 |
| Sulfur content | ASTM D5453 | mg/kg | <1 | <17 |
| IBP | ASTM D86 | °C | 316 | *NA* |
| FBP | ASTM D86 | °C | 381 | *NA* |
| Water Content | ASTM D 6304 | ppm | 110 | 150 |

| | | | | |
|---|---|---|---|---|
| *NA: Not applicable* as *the fluid starts to foam which prevents from performing the test.* | | | | |

### EXAMPLE 2 - Wood preservation against termites

Dimensions of the wood samples were 50 mm x 50 mm x 10 mm.

### Example 2-1: Boiling method

The wood samples were boiled into the preservative fluid for 15 min in a treatment vessel. After treatment, the wood samples were dried for 2 weeks.

### Example 2-2: Dipping method

The wood samples were immerged completely in a treatment vessel containing the preservative fluid for 20s. After treatment, the wood samples were dried for 2 weeks.

### Exemple 2-3: Termites attack

After completion of the preservation treatment, the wood samples were taken for exposure. A glass tube with both ends opened was inserted in a disc made on each wood sample with silicon. A mixture of red moist soil, sand and fragment of culture wood was poured inside the tubes. The mixture, which was not pressed down into the tube, occupied at least two-thirds of the volume of the tube (height of about 7 cm). A total of 10 *Reticulitermes* species of European termites were released inside the upper end of the tubes. The tubes were then covered with a piece of aluminum foil to prevent evaporation of water and escape from termites. The wood samples were also set on individual trays to prevent any escape from termites and kept in an environmental chamber for 4 weeks.

Untreated wood samples were also submitted to a termites attack under the same protocol.

### Example 2-4: Results

The preservation performance of compositions C1 and CC1 were evaluated by counting the number of dead *Reticulitermes* species of European termites after 4 weeks.
Results are shown in Table 2 for the boiling method.

**Table 2 - Wood preservation against termites including a boiling process**

| **Preservative fluid** | **C1** | **CC1** | **None** |
|---|---|---|---|
| *Average results over three replicates (%)* | | | |
| Termite infestation range (% of Infestation Visually ) | 0.00 | 26.67 | 56.67 |
| **Total of dead termites** | **100.00** | **33.33** | **10.00** |
| **Wood color** | **Stable** | **Unstable** | **Stable** |

Following the preservation treatment with the boiling method, the composition C1 according to the invention recorded no infestation with a 100.00% mortality rate whereas the comparative composition CC1 exhibited an infestation range of 26.67% with mortality rate of 33.33%. The untreated control exhibited an infestation range of 56.67% with a 10.00% mortality rate.

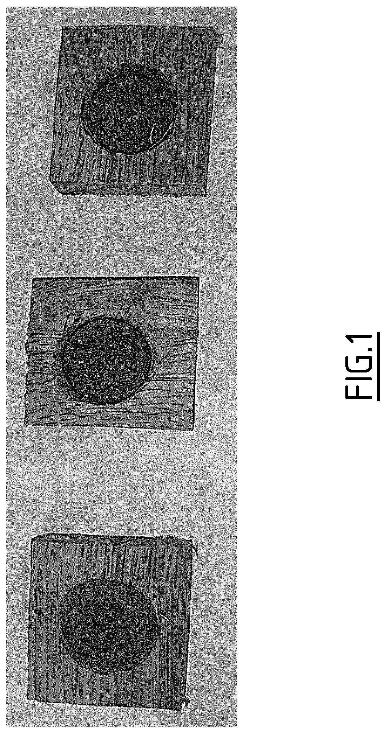

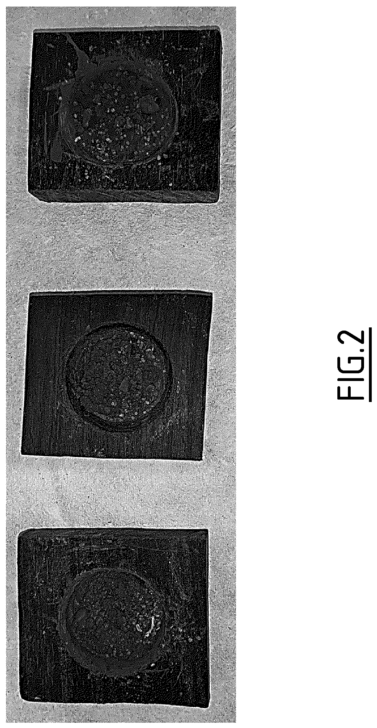

Moreover, after 4 weeks, the wood samples treated with C1 (Fig 1) did not show any color change whereas the ones treated with CC1 (Fig 2) turned dark brown. This can be explained by the lower water content of C1, making it more stable against wood samples over time.

Results are shown in Table 3 for the dipping method.

**Table 3 - Wood preservation against termites including a dipping process**

| **Preservative fluid** | **C1** | **CC1** | **None** |
|---|---|---|---|
| *Average results over three replicates (%)* | | | |
| Termite infestation range (% of Infestation Visually ) | 0.00 | 31.67 | 58.33 |
| **Total of dead termites** | **100.00** | **23.33** | **6.67** |

Following the preservation treatment with the dipping method, the composition C1 according to the invention recorded no infestation with a 100.00% mortality rate whereas the comparative composition CC1 exhibited an infestation range of 31.67% with mortality rate of 23.33%. The untreated control exhibited an infestation range of 58.33% with a 6.67% mortality rate.

C1 was found to be effective as a wood preservative oil against the *Reticulitermes* species of European termites by boiling in hot oil method and dipping method under laboratory conditions. Moreover, C1 was found to be more stable against wood sample **over time.**

### EXAMPLE 3 - Wood preservation against beetles

Dimensions of the wood samples were 50 mm x 25 mm x 15 mm. The transverse faces were sealed with paraffin wax by applying three coats at 90°C.

### Example 3-1: Boiling method

The wood samples were boiled into the preservative fluid for 15 min in a treatment vessel. Each sample was removed from the fluid using a forceps. The fluid was squeezed from all sealed faces. After treatment, the wood samples were set on their lateral narrow faces, resting on glass rod without touching one another, and were well-ventilated in air-conditioned room (20 - 24°C, 65 - 75% humidity) for four weeks.

### Example 3-2: Dipping method

The wood samples were immerged completely in a treatment vessel containing the preservative fluid for two periods of 10 seconds separated by an internal of 24 hrs. Each sample was removed from the fluid using a forceps. The fluid was sponged from all sealed faces. After treatment, the wood samples were set on their lateral narrow faces, resting on glass rod without touching one another, and were well-ventilated in air-conditioned room (20 - 24°C, 65 - 75% humidity) for four weeks.

### Exemple 3-3: Beetles attack

After completion of the preservation treatment, the wood samples were placed in individual plastic jars. A total of 10 larvae of *Hylotrupes bajulus* beetles were then released inside each jar before monitoring the xylophagous species behaviour for 4 weeks. For ventilation purposes, every jars were covered with a black cotton cloth.

Untreated wood samples were also submitted to a beetles attack under the same protocol.

### Example 3-4: Results

The preservation performance of compositions C1 and CC1 were evaluated by counting the number of dead larvae of *Hylotrupes bajulus* beetles after 4 weeks.

Results are shown in Table 4 for the boiling method.

**Table 4 - Wood preservation against beetles including a boiling process**

| **Preservative fluid** | **C1** | **CC1** | **None** |
|---|---|---|---|
| *Average results over three replicates (%)* | | | |
| Mortality rate of larvae having tunnelled | 66.67 | 26.67 | 6.67 |
| Mortality rate of larvae having not tunnelled | 33.33 | 16.67 | 0.00 |
| Total **of dead larvae** | **100.00** | **43.33** | **6.67** |

Following the preservation treatment with the boiling method, the composition C1 according to the invention exhibited an average 66.67% mortality rate of larvae having tunneled, an average 33.33% mortality rate of larvae having not tunneled and a total mortality rate of 100.00%. On the other hand, the comparative composition CC1 exhibited an average 26.67% mortality rate of larvae having tunneled, an average 16.67% mortality rate of larvae having not tunneled and a total mortality rate of 43.33%. The untreated wood sample exhibited a total mortality rate of 6.67%.

Results are shown in Table 5 for the dipping method.

**Table 5 - Wood preservation against beetles including a dipping process**

| **Preservative fluid** | **C1** | **CC1** | **None** |
|---|---|---|---|
| *Average results over three replicates (%)* | | | |
| Mortality rate of larvae having tunnelled | 63.33 | 20.00 | 3.33 |
| Mortality rate of larvae having not tunnelled | 33.33 | 16.67 | 3.33 |
| **Total of dead larvae** | **96.67** | **36.67** | **6.67** |

Following the preservation treatment with the dipping method, the composition C1 according to the invention exhibited an average 63.33% mortality rate of larvae having tunneled, an average 33.33% mortality rate of larvae having not tunneled and a total mortality rate of 96.67%. On the other hand, the comparative composition CC1 exhibited an average 20.00% mortality rate of larvae having tunneled, an average 16.67% mortality rate of larvae having not tunneled and a total mortality rate of 36.67%. The untreated wood sample exhibited an average 3.33% mortality rate of larvae having tunneled, an average 3.33% mortality rate of larvae having not tunneled and a total mortality rate of 6.67%.

C1 was found to be effective as a wood preservative oil against the larvae of *Hylotrupes bajulus* beetles by boiling in hot oil method and dipping method under laboratory conditions.

## Claims

1. The use of a hydrocarbon fluid as a wood preservative, wherein said fluid comprises less than 1000 ppm by mass of aromatics, has a flash point measured according to standard ASTM D93 higher than 100°C, has a mass ratio normal paraffins/isoparaffins ranging from 0.2 to 1.0 and has an initial boiling point and a final boiling point in range from 265°C to 390°C.

2. The use of the hydrocarbon fluid as defined in claim 1, as a wood preservative against xylophagous species.

3. The use according to claim 1 or 2, wherein the hydrocarbon fluid has a water content, measured according to standard ASTM D6304, lower than 150 ppm, preferably lower than 130 ppm, preferably lower than 120 ppm.

4. The use according to any one of claims 1 to 3, wherein the hydrocarbon fluid has a flash point, measured according to standard ASTM D93, higher than 130°C, preferably higher than 150°C.

5. The use according to any one of claims 1 to 4, wherein the hydrocarbon fluid comprises less than 500 ppm by mass of aromatics, preferably, less than 300 ppm by mass of aromatics, preferably, less than 200 ppm by mass of aromatics, based on the total mass of hydrocarbon fluid.

6. The use according to any one of claims 1 to 5, wherein the hydrocarbon fluid has a kinematic viscosity at 40°C, measured according to standard ASTM D445, ranging from 1 to 20 mm²/s, preferably from 2 to 15 mm²/s, more preferably from 3 to 10 mm²/s.

7. The use according to any one of claims 1 to 6, wherein the hydrocarbon fluid comprises a naphthene content ranging from 5% to 40% by mass, preferably from 7% to 30%, more preferably from 8% to 25%, based on the total mass of the hydrocarbon fluid.

8. The use according to any one of claims 1 to 7, wherein the hydrocarbon fluid has a mass ratio normal paraffins/isoparaffins ranging from 0.3 to 0.9, preferably from 0.35 to 0.8.

9. The use according to any one of claims 2 to 8, wherein the xylophagous species are selected from the group consisting of termites, beetles, and fungi.

10. A method for treating wood, said method comprising a step of contacting the wood with a hydrocarbon fluid as defined in any one of claims 1 to 8.

11. The method according to claim 10, wherein the step of contacting is a step of immersing the wood into the hydrocarbon fluid.

12. The method for protecting wood according to claims 10 or 11, wherein the hydrocarbon fluid is heated to a temperature ranging from 140°C to 200°C, preferably from 140°C to 160°C.

13. A method for protecting wood against xylophagous species, said method comprising a step of contacting the wood with a hydrocarbon fluid as defined in any one of claims 1 to 8.
